# EUROPÄISCHE PATENTSCHRIFT

(11) **EP 2 625 003 B1**
(45) Veröffentlichungstag und Bekanntmachung des Hinweises auf die Patenterteilung: **10.12.2014**
(21) Anmeldenummer: 11785313.5
(22) Anmeldetag: 21.09.2011
(51) Int. Cl.: B25B 1/10, B25B 1/24

(54) **LINEARER MECHANISCHER SCHNELLVERSCHLUSS FÜR EINEN ZENTRIERSPANNER**
LINEAR MECHANICAL QUICK-RELEASE FASTENER
FERMETURE RAPIDE MÉCANIQUE LINÉAIRE

(30) Priorität: 05.10.2010 DE 102010047380
(43) Veröffentlichungstag der Anmeldung: 14.08.2013
(73) Patentinhaber: Lang Technik GmbH, 73765 Neuhausen (DE)
(72) Erfinder: GÜNTER, Lang, 73249 Wernau (DE)
(74) Vertreter: Ludewig, Rita
(86) Internationale Anmeldenummer: PCT/EP2011/004724
(87) Internationale Veröffentlichungsnummer: WO 2012/045398

(56) Entgegenhaltungen:
- EP-A2- 0 890 418
- EP-A2- 2 105 257
- US-A- 5 893 551
- US-A1- 2004 032 071

## Beschreibung

Die Erfindung betrifft einen linearen mechanischen Schnellverschluß zum Verriegeln und Entriegeln von kompatiblen Spannmitteln besonders auf Zentrierspannern an automatischen Präzisionswerkzeugmaschinen für Groß- und Kleinserienproduktionen.

Es sind eine Vielzahl von linearen mechanischen Schnellverschlüssen bekannt, die das Prinzip eines linearen Schnellverschlusses sowie einer schwalbenschwanzförmigen Führung der Verschlußteile benutzen. So zum Beispiel bei Werkzeugmaschinen, die von Hand- und Heimwerkern zum Bohren, Schrauben, Fräsen und Schleifen verwendet werden. Diese Maschinen werden häufig von einem Akkumulator mit Energie versorgt. Diese Akkumulatoren werden teilweise über eine schwalbenschanzförmige Führung mit der Maschine verbunden und durch Einrasten verriegelt.

Aus dem Gebrauchsmuster DE 1 864 150 U ist auch eine Vorrichtung zum Ver- und Entriegeln von Schäumformen bekannt, die aus einer Ober- und Unterform besteht und an denen ein Schnellverschluß angebracht ist, der sich durch mehrere erhabene, nebeneinander angeordnete Rastelemente und lineare Verschiebung mittels Verriegelungslaschen öffnen und schließen läßt.

Die Druckschrift DE 1 268 940 offenbart eine formschlüssige Kupplung zwischen einem Schneidstahl und einem Stahlhalter, die beide denselben eckigen Querschnitt aufweisen und in einer, sie allseitig umschließenden Führung in Längsrichtung des Stahlhalterschaftes verschiebbar sind, in einer mit radial angeordneten Werkzeugen ausgestatteten, alle Zahnlücken eines Zahnrades, gleichzeitig bearbeitenden Zahnradstoßmaschine, bei der die beiden kuppelnden Teile mittels einer quer zum Schaft des Stahlhalters angeordneten, ineinandergreifenden Nut- und Federverbindung lösbar gekuppelt sind, dadurch gekennzeichnet, daß die Nut und Feder rechtwinklig bzw. quer zur Schneidrichtung des Schneidstahls und durchgehend über die ganze Breite von Schneidstahl und Stahlhalter verlaufen, derart, daß für jede der beiden Verschieberichtungen längs des Schaftes nur ein und dieselbe Übertragungsfläche wirksam ist. Die Aufgabe dieser Lösung besteht darin, eine, bei gleicher Leistungsfähigkeit die Kosten für das Auswechseln oder den Ersatz des Schneidstahls wesentlich herabzusetzen.

Schließlich ist aus der Druckschrift DE 20 43 855 eine Werkzeugaufnahme zur Befestigung eines mit einem Befestigungsschaft oder -zapfen versehenen Werkzeuges oder Werkzeugteils am Stößel oder an der Spindel einer Werkzeugmaschine, die aus einem quer zur Längsachse der Arbeitsspindel verlaufenden, seitlich randoffenen, sich bis zum unteren Spindelende erstreckenden Schlitz besteht, in der der Befestigungsschaft oder -zapfen zwischen dem Schlitzgrund und die gegen diesen weisende Fläche eines in den Schlitz eingreifenden Verschlußstücks festklemmbar ist, zu entnehmen. Die Aufgabe dieser Erfindung besteht darin, eine Werkzeugaufnahme der beschriebenen Art zu schaffen, die insbesondere den automatischen Werkzeugwechsel erleichtert und vereinfacht. Die Lösung der Aufgabe ist dadurch gekennzeichnet, daß das Verschlußstück als in Längsrichtung des Stößels bzw. der Spindel beweglicher Schieber ausgebildet ist und die Schlitzbreite der Dicke des Befestigungsschaftes oder -zapfens entspricht.

Alle beschriebenen Lösungen sind auf spezielle Werkzeugmaschinen ausgerichtet und können nur an dieser Kategorie von Maschine eingesetzt werden. Des weiteren verlaufen Schwalbenschwanzverbindungen über den gesamten Kupplungsbereich, was lange Verbindungswege zur Folge hat. Die letzte Druckschrift ist zwar für einen automatischen Werkzeugwechsel an Werkzeugmaschinen vorgesehen, geht aber von einem bestimmten Werkzeughaltertyp aus, der nicht an jeder Werkzeugmaschine vorzufinden ist.

EP-0890418 offenbart einen Schnellverschluß nach dem Oberbegriff des Anspruchs 1.

Es war deshalb Aufgabe der Erfindung einen linearen mechanischen Schnellverschluß zu konzipieren, der einfach zu handhaben, sehr klein ausführbar, eine sehr präzise Verbindung gewährleistet, im wesentlichen mit drei Handgriffen mechanisch zu bedienen ist, der auf alle Arten von Zentrierspannern und der für die Aufnahme aller Arten von kompatiblen Spannmitteln zur Bearbeitung von Werkstücken, besonders an automatischen Präzisionswerkzeugmaschinen einsetzbar ist.

Die Aufgabe wird durch einen linearen mechanischen Schnellverschluß zum Verriegeln und Entriegeln von kompatiblen Spannmitteln besonders auf Zentrierspannern an automatischen Präzisionswerkzeugmaschinen, gemäß Anspruch 1, gelöst. Die Erfindung geht dabei von einem bekannten linearen mechanischen Schnellverschluß aus, der ein Unterteil und ein Oberteil aufweist, die Rast- und Aufnahmeelemente aufweisen, die ineinandergreifen und durch eine lineare Bewegung zueinander in einer Ebene zu verriegeln und zu entriegeln sind. Er ist dadurch gekennzeichnet, daß das Unterteil auf einer Ebene mindestens zwei, in einer Achse quer zur Spannrichtung des Unterteils in einem Zentrierspanner, nacheinander und erhaben angeformte Rastelemente und an einer unteren Ebene zwei angeformte Grundbacken, eine mittige durchgehende Gewindeöffnung zur Aufnahme einer Gewindespindel und an einer Stirnseite der beiden Ebenen ein Gewindeloch zur Aufnahme eines Spannriegels und eines Schraubelements aufweist.

Besonders hervorzuheben ist der konstruktive Aufbau des Unterteils, weil er einerseits den unteren Teil des linearen mechanischen Schnellverschlusses aufweist und andererseits, gemäß Anspruch 7, die Aufnahme des linearen mechanischen Schnellverschlusses auf jedem Zentrierspanner gestattet.

Das Oberteil des linearen mechanischen Schnellverschlusses weist an einer unteren Ebene mindestens zwei in einer Achse quer zur Spannrichtung eines Zentrierspanners, nacheinander eingeformte Ausnehmungen auf, die als Gegenstück zur Aufnahme der Rastelemente des Unterteils aufgeführt sind, wobei eine Ausnehmung an ihrer offenen Stirnseite mit einem von oben zugänglichen, durchgehend eingeformten Aufnahmebereich verbunden ist und die zweite Ausnehmung mit ihrer Stirnseite am Ende der Ebene offen ist und bei dem an einer oberen Ebene eine Aufnahme für jedes kompatible Spannmittel anordenbar ist.

Auch beim Oberteil ist es vorteilhaft, daß es einerseits die zweite Hälfte des linearen mechanischen Schnellverschlusses und andererseits, gemäß Anspruch 8, eine universelle Aufnahme für jedes kompatible Spannmittel für die Bearbeitung von Werkzeugen aufweist.

Das Unterteil und das Oberteil des linearen mechanischen Schnellverschlusses kann deshalb jeweils zwei Funktionen ausführen. Sie können einen linearen mechanischen Schnellverschluß miteinander bilden und darüber hinaus einerseits auf einem Zentrierspanner angeordnet werden und anderseits ein kompatibles Spannmittel für die Aufnahme eines zu bearbeiteten Werkstücks aufnehmen, wodurch der erfindungsgemäße lineare Schnellverschluß universell einsetzbar ist.

Der konstruktive Aufbau der beiden Teile des erfindungsgemäßen linearen mechanischen Schnellverschlusses, gewährleistet, gemäß Anspruch 2, eine schnelle und einfache Handhabung desselben, indem das Oberteil mit dem Aufnahmebereich der einen Ausnehmung auf eines der Rastelemente des Unterteils senkrecht aufzusetzen und durch eine kurze lineare Verschiebung des Oberteils in eine Richtung beide Rastelemente des Unterteils in die Ausnehmungen des Oberteils einzurasten und mit dem stirnseitig am Unterteil angeordneten Spannriegel und dem Schraubelement gegen das eingerastete Oberteil zu verriegeln und im gegenteiligen Verlauf zu entriegeln ist.

Besonders vorteilhaft ist dabei das bloße senkrechte Aufsetzen des Oberteils auf das Unterteil und der nur kurze lineare Verschiebeweg beider Teile. Sie vereinfachen die Verbindung an sich und verkürzen den bisherigen erheblichen Zeitaufwand beim Wechseln des Oberteils mit einem darauf angeordneten kompatiblen Spannmittel. Es ist keine stirnseitige Einführung des Oberteils in das Unterteil erforderlich, auch weil das Führungsprofil der Rastelemente und Ausnehmungen unterbrochen ist und nicht durchgehend verläuft, was sich außerdem beim Anordnen des kompatiblen Spannmittels auf dem Zentrierspanner einer beliebigen Präzisionswerkzeugmaschine platzsparend auswirkt.

Hervorzuheben ist des weiteren die Ausführungsvariante der Spannebenen des linearen mechanischen Schnellverschlusses, gemäß Anspruch 3, die dadurch gekennzeichnet ist, daß auf der Ebene des Unterteils weitere in einer Achse quer zur Spannrichtung eines Zentrierspanners und weitere nacheinander erhaben angeformte Rastelemente sowie in die Ebene des Unterteils in einer Achse quer zur Spannrichtung eines Zentrierspanners, weiterer nacheinander eingeformte Ausnehmungen jeweils deckungsgleich auch nebeneinander anordenbar sind.

Mit dieser Variante kann die Größe der Zentrierspanner und der Spannmittel sowie der darin eingespannten Werkstücke und die Gewährleistung einer schnellen und trotzdem präzisen Schnellverbindung, trotz hoher Gewichte und damit verbunden einwirkender physikalischer Kräfte, Berücksichtigung finden.

Besonders hervorzuheben ist die konstruktive Form der Rastelemente des Unterteils und der Ausnehmungen des Oberteils, nach den Ansprüchen 4 und 5, indem die Rastelemente des Unterteils und die Ausnehmungen des Oberteils eine ebene Oberfläche mit angefasten Kanten, sowie einerseits eine gerade Stirnseite und gegenüberliegend eine konvexe, halbrunde Stirnseite aufweisen und die Rastelemente des Unterteils ein um die Außenkontur verlaufendes schwalbenschwanzförmiges Profil als Feder und die Ausnehmungen des Oberteils ein um die Außenkontur verlaufendes schwalbenschwanzförmiges Profil als Nut aufweisen.

Die Form der Verbindungselemente des erfindungemäßen linearen mechanischen Schnellverschlusses gewährleistet eine exakte und sehr präzise Schnellverbindung. Dabei kann diese Formgestaltung für große und sehr kleine niedermaßige Bereiche hergestellt und verwendet werden. Außerdem ist die Linearbewegung vor dem Verriegeln durch die halbrunden Stirnseiten mechanisch gleitend begrenzt und kann sich nicht verkanten. Wenn die Linearbewegung nicht bis zum Ende ausgeführt wurde, kann nicht verriegelt werden, was gleichzeitig eine hohe Sicherheit bei dem Verriegelungsvorgang gewährleistet.

Von besonderer Bedeutung ist die konstruktive Ausführung der Ausnehmungen im Oberteil des linearen mechanischen Schnellverschlusses, gemäß Anspruch 6, indem an der einen Ausnehmung ein Aufnahmebereich mit einer quadratischen Form, einer senkrechten ebenen Innenkontur und einer angefasten Oberkante durchgehend angeformt ist.

Dieser Aufnahmebereich gestattet das vertikale Einsetzen und Herausnehmen der Ausnehmungen auf das und aus dem Unterteil und damit das Auswechseln von kompatiblen Spannmitteln in einer bisher nicht möglichen Geschwindigkeit und in hoher Präzision.

Die Erfindung soll nachstehend anhand eines Ausführungsbeispiels näher beschrieben werden, wobei gleiche Teile mit gleichen Ziffern gekennzeichnet sind. Die Zeichnungen zeigen dabei in
- Fig. 1: die perspektivische Vorderansicht eines Unterteils und eines Oberteils des erfindungsgemäßen linearen mechanischen Schnellverschlusses in offenem Zustand.
- Fig. 2: die perspektivische Draufsicht eines, Unterteils und eines Oberteils des erfindungsgemäßen linearen mechanischen Schnellverschlusses in verriegeltem Zustand.

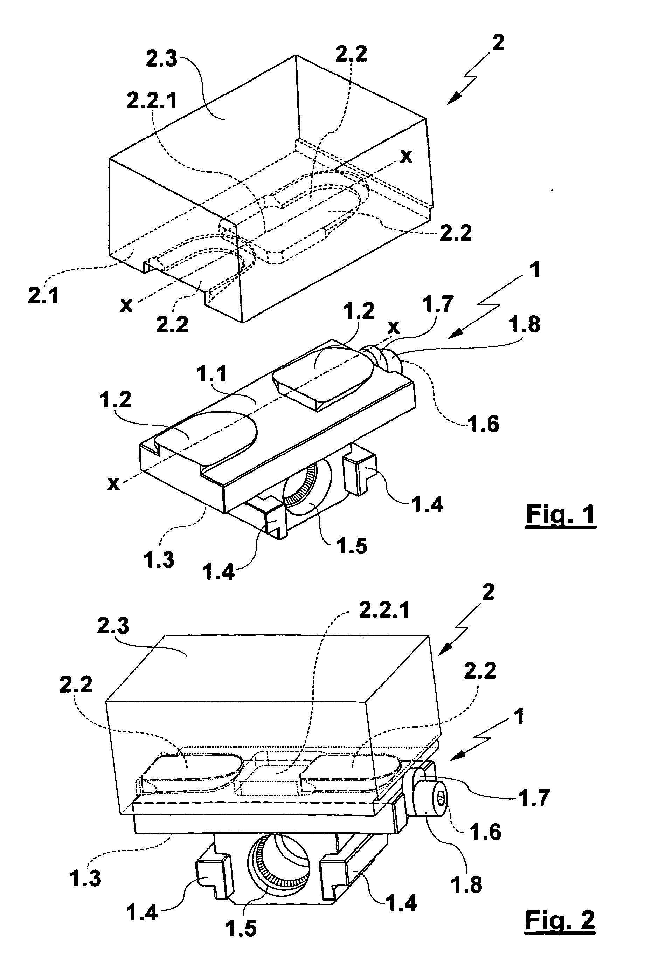

In einem Ausführungsbeispiel, gemäß Fig. 1, wird das Unterteil 1 mittels seiner, an der unteren Ebene 1.3 mit seiner durchgehenden Gewindeöffnung 1.5 auf die Gewindespindel eines herkömmlichen, in der Zeichnung nicht näher dargestellten, Zentrierspanners aufgedreht und mit den angeformten Grundbacken 1.4 in dessen Führungsnuten eingeführt. Auf der oberen Ebene 1.1 sind vorzugsweise zwei, in einer Achse x, quer zur Spannrichtung des gedachten Zentrierspanners, Rastelemente 1.2 nacheinander erhaben angeformt. Diese weisen eine ebene Oberfläche mit angefasten Kanten, sowie vorzugsweise einerseits eine gerade Stirnseite und gegenüberliegend eine konvex halbrunde Stirnseite auf.

Das Oberteil 2 ist an seiner unteren Ebene 2.1 mit vorzugsweise zwei in einer Achse x, quer zur Spannrichtung, des nicht dargestellten Zentrierspanners, nacheinander eingeformte Ausnehmungen 2.2 ausgestattet, die als Gegenstück zur Aufnahme der Rastelemente 1.2 des Unterteils 1 ausgeführt sind. Eine Ausnehmung 2.2 ist an ihrer geraden Stirnseite durchgehend mit einem von oben zugänglichen, eingeformten Aufnahmebereich 2.2.1 verbunden und die zweite Ausnehmung 2.2 ist an ihrer geraden Stirnseite zum Ende der Ebene 2.1 offen. Die Ausnehmungen 2.2 weisen eine ebene innere Oberfläche und angefaste Oberkanten auf. Einerseits haben sie wie die Rastelemente 1.2 eine gerade Stirnseite und gegenüberliegend eine konvex halbrunde Stirnseite. Auf der oberen Ebene 2.3 des Oberteils 2 ist eine, in den Zeichnungen nicht näher dargestellte, Aufnahmevorrichtung, zur Aufnahme eines kompatiblen Spannmittels vorgesehen, das zur Aufnahme von zu bearbeitenden Werkstücken dient, angeordnet. Die Rastelemente 1.2 des Unterteils 1 weisen ein um die Außenkontur verlaufendes schwalbenschwanzförmiges Profil als Feder und die Ausnehmungen 2.2 des Oberteils 2 ein um die Außenkontur verlaufendes schwalbenschwanzförmiges Profil als Nut auf. Der an der einen Ausnehmung 2.2 am Oberteil 2 durchgehend angeformte Aufnahmebereich 2.2.1 hat vorzugsweise eine quadratische Form mit einer senkrechten ebenen Innenkontur und einer angefasten Oberkante.

Gemäß Fig.2 wird das Oberteil 2 wird mit dem an der unteren Ebene 2.1 eingeformten Aufnahmebereich 2.2.1 der einen Ausnehmung 2.2 auf eines der Rastelemente 1.2 des Unterteils 1 aufgesteckt und durch lineare Verschiebung des Oberteils 2 in eine Richtung werden beide Rastelemente 1.2 des Unterteils 1 in die Ausnehmungen 2.2 des Oberteils 2 eingeführt. Beide Teile des Schnellverschlusses liegen nun symmetrisch übereinander. Mit dem stirnseitig am Unterteil 1 angeordneten Spannriegel 1.7 und dem Schraubelement 1.8 sind die beiden Schnellverschlußteile gegeneinander zu verriegeln. Soll das, in den Zeichnungen nicht näher dargestellte, auf der oberen Ebene 2.3 des Oberteils 2 angeordnete kompatible Spannmittel mit dem bearbeiteten Werkstück vom Zentrierspanner der Präzisionswerkzeugmaschine wieder abgenommen werden, wird das Schraubelement 1.8 gelöst, der Spannriegel 1.7 entriegelt, das Oberteil 2 in entgegengesetzter Richtung linear verschoben und kann von dem Unterteil 1 vertikal abgenommen werden.

### Zusammenstellung der verwendeten Bezugszeichen

- 1: Unterteil,
- 1.1: obere Ebene,
- 1.2: erhabene Rastelemente,
- 1.3: untere Ebene,
- 1.4: Grundbacken,
- 1.5: durchgehende Gewindeöffnung,
- 1.6: Gewindeloch,
- 1.7: Spannriegel,
- 1.8: Schraubelement,
- 2: Oberteil,
- 2.1: untere Ebene,
- 2.2: Ausnehmungen,
- 2.2.1: Aufnahmebereich,
- 2.3: obere Ebene,

## Patentansprüche

1. Linearer mechanischer Schnellverschluß zum Verriegeln und Entriegeln von kompatiblen Spannmitteln besonders auf Zentrierspannern an automatischen Präzisionswerkzeugmaschinen, aufweisend ein Unterteil (1) und ein Oberteil (2), die mit einem linearen Schnellverschluß in einer Ebene zu verriegeln und zu entriegeln sind, wobei
das Unterteil (1) auf einer Ebene (1.1) mindestens zwei in einer Achse (x), quer zur Spannrichtung eines Zentrierspanners, nacheinander und erhaben angeformte Rastelemente (1.2) und an einer unteren Ebene (1.3) zwei angeformte Grundbacken (1.4), eine mittige durchgehende Gewindeöffnung (1.5) zur Aufnahme einer Gewindespindel aufweist
das Oberteil (2) an einer unteren Ebene (2.1) mindestens zwei in einer Achse (x), quer zur Spannrichtung eines Zentrierspanners, nacheinander eingeformte Ausnehmungen (2.2) aufweist, die als Gegenstück zur Aufnahme der Rastelemente (1.2) des Unterteils (1) ausgeführt sind, daß eine Ausnehmung (2.2) an ihrer offenen Stirnseite mit einem von oben zugänglichen, durchgehend eingeformten Aufnahmebereich (2.2.1) verbunden ist
**dadurch gekennzeichnet, daß** das Unterteil (1) an einer Stirnseite der beiden Ebenen (1.1, 1.3) ein Gewindeloch (1.6) zur Aufnahme eines Spannriegels (1.7) und eines Schraubelements (1.8) aufweist, und daß die zweite Ausnehmung (2.2) mit ihrer Stirnseite am Ende der Ebene (2.1) offen ist und das Oberteil (2) eine obere Ebene (2.3) aufweist, die jedes kompatible Spannmittel aufnehmen kann.

2. Linearer mechanischer Schnellverschluß nach Anspruch 1, **dadurch gekennzeichnet, daß** das Oberteil (2) mit dem Aufnahmebereich (2.2.1) der einen Ausnehmung (2.2) auf eines der Rastelemente (1.2) des Unterteils (1) aufzustecken und durch lineare Verschiebung des Oberteils (2) beide Rastelemente (1.2) des Unterteils (1) in die Ausnehmungen (2.2) des Oberteils (2) einzurasten und mit dem stirnseitig am Unterteil (1) angeordneten Spannriegel (1.7) und dem Schraubelement (1.8) zu verriegeln und im rückwärtigen Verlauf zu entriegeln ist.

3. Linearer mechanischer Schnellverschluß nach den Ansprüchen 1 und 2, **dadurch gekennzeichnet, daß** auf der Ebene (1.1) des Unterteils (1) weitere in einer Achse (x) quer zur Spannrichtung des Zentrierspanners, nacheinander erhaben angeformte Rastelemente (1.2) und weitere in die Ebene (2.1) des Unterteils (2) in einer Achse (x) quer zur Spannrichtung des Zentrierspanners, nacheinander eingeformte Ausnehmungen (2.2) jeweils deckungsgleich auch nebeneinander anordenbar sind.

4. Linearer mechanischer Schnellverschluß nach einem der vorhergehenden Ansprüche, **dadurch gekennzeichnet, daß** die Rastelemente (1.2) des Unterteils (1) und die Ausnehmungen (2.2) des Oberteils (2) eine ebene Oberfläche mit angefasten Kanten, sowie einerseits eine gerade Stirnseite und gegenüberliegend eine konvex halbrunde Stirnseite aufweisen.

5. Linearer mechanischer Schnellverschluß nach einem der vorhergehenden Ansprüche, **dadurch gekennzeichnet, daß** die Rastelemente (1.2) des Unterteils (1) ein, um die Außenkontur verlaufendes, schwalbenschwanzförmiges Profil als Feder und die Ausnehmungen (2.2) des Oberteils (2) ein, um die Außenkontur verlaufendes, schwalbenschwanzförmiges Profil als Nut aufweisen.

6. Linearer mechanischer Schnellverschluß nach einem der vorhergehenden Ansprüche, **dadurch gekennzeichnet, daß** der an der einen Ausnehmung (2.2) durchgehend angeformte Aufnahmebereich (2.2.1) eine quadratische Form mit einer senkrechten ebenen Innenkontur und einer angefasten Oberkante aufweist.

7. Linearer mechanischer Schnellverschluß nach Anspruch 1, **dadurch gekennzeichnet, daß** das Unterteil (1) mit seinen zwei an der Ebene (1.3) angeformten Grundbacken (1.4) und seiner mittigen durchgehenden Gewindeöffnung (1.5) zur Aufnahme einer Gewindespindel auf jedem beliebigen Zentrierspanner anordenbar ist.

8. Linearer mechanischer Schnellverschluß nach Anspruch 1, **dadurch gekennzeichnet, daß** das Oberteil (2) an seiner Ebene (2.3) derart ausgestattet ist, daß jedes kompatible Spannmittel aufzunehmen ist.

## Claims

1. Linear mechanical quick release fastener for locking and unlocking compatible clamping means particularly on centring clamps on automatic precision machine tools, having a lower part (1) and an upper part (2) which are locked and unlocked in a plane with a linear quick release fastener, wherein the lower part (1) has, on one plane (1.1), at least two latching elements (1.2) formed raised and consecutively on an axis (x) transverse to the clamping direction of a centring clamp, and on a lower plane (1.3), two formed base jaws (1.4) and a centred continuous thread opening (1.5) for receiving a threaded spindle, and wherein the upper part (2) has, on a lower plane (2.1), at least two recesses (2.2) formed consecutively on an axis (x) transverse to the clamping direction of a centring clamp, said recesses (2.2) being configured as counter pieces for receiving the latching elements (1.2) of the lower part (1), and wherein a recess (2.2) is joined on its open end face to a receiving region (2.2.1) which is formed continuous and is accessible from above, **characterised in that**
the lower part (1) has a threaded hole (1.6) on an end face of the two planes (1.1, 1.3) for receiving a clamping piece (1.7) and a screw element (1.8), and
the second recess (2.2) is open with its end face on the end of the plane (2.1), and the upper part (2) has an upper plane (2.3) which can receive any compatible clamping means.

2. Linear mechanical quick release fastener according to claim 1, **characterised in that** the upper part (2) can be attached onto one of the latching elements (1.2) of the lower part (1) via the receiving region (2.2.1) of the one recess (2.2), and the two latching elements (1.2) of the lower part (1) can be latched into the recesses (2.2) of the upper part (2) by linear displacement of the upper part (2) and locked with the clamping piece (1.7) arranged on the end face of the lower part (1) and the screw element (1.8), and unlocked by reversing the process.

3. Linear mechanical quick release fastener according to claims 1 and 2, **characterised in that** further latching elements (1.2) formed raised and consecutively on an axis (x) transverse to the clamping direction of the centring clamp can be arranged on the plane (1.1) of the lower part (1), and further recesses (2.2) formed consecutively on an axis (x) transverse to the clamping direction of a centring clamp can in each case be arranged congruently and in parallel on the plane (2.1) of the lower part (2).

4. Linear mechanical quick release fastener according to any of the preceding claims, **characterised in that** the latching elements (1.2) of the lower part (1) and the recesses (2.2) of the upper part (2) can have a flat surface with chamfered edges, a straight end face at one end and an opposing convex semi-circular end face.

5. Linear mechanical quick release fastener according to any of the preceding claims, **characterised in that** the latching elements (1.2) of the lower part (1) have a dovetailed profile extending around the outer contour as a tongue, and the recesses (2.2) of the upper part (2) have a dovetailed profile extending around the outer contour as a groove.

6. Linear mechanical quick release fastener according to any of the preceding claims, **characterised in that** the receiving region (2.2.1) formed continuous on the one recess (2.2) has a square shape with a perpendicular flat inner contour and a chamfered top edge.

7. Linear mechanical quick release fastener according to claim 1, **characterised in that** the lower part (1), with its two base jaws (1.4) formed on the plane (1.3) and its centred continuous thread opening (1.5) for receiving a threaded spindle, can be arranged on any centring clamp.

8. Linear mechanical quick release fastener according to claim 1, **characterised in that** the upper part (2) is configured on its plane (2.3) in such a way that any compatible clamping means can be received.

## Revendications

1. Fermeture rapide mécanique linéaire destinée à verrouiller et à déverrouiller des moyens de serrage compatibles, en particulier sur des dispositifs de serrage de centrage sur des machines-outils automatiques de précision, comprenant une partie inférieure (1) et une partie supérieure (2) qui sont verrouillées et déverrouillées dans un plan par une fermeture rapide linéaire, ladite partie inférieure (1) présentant, sur un plan (1.1), au moins deux éléments d'arrêt (1.2) surmoulés l'un après l'autre et en relief dans un axe (x) transversalement à la direction de serrage d'un dispositif de serrage de centrage, ainsi que, sur un plan inférieur (1.3), deux mâchoires de base (1.4) surmoulées, une ouverture taraudée (1.5) centrale traversante destinée à recevoir une broche filetée, ladite partie supérieure (2) présentant sur un plan inférieur (2.1) au moins deux évidements (2.2) ménagés l'un après l'autre dans un axe (x) transversalement à la direction de serrage d'un dispositif de serrage de centrage, qui sont réalisés en tant que pendant pour recevoir lesdits éléments d'arrêt (1.2) de la partie inférieure (1), et un évidement (2.2) étant relié, sur sa face frontale ouverte, à une zone de réception (2.2.1) accessible d'en haut qui est ménagée de manière continue, **caractérisée par le fait**
**que** ladite partie inférieure (1) présente, sur une face frontale des deux plans (1.1, 1.3), un trou taraudé (1.6) de réception d'un verrou de serrage (1.7) et d'un élément de vissage (1.8), et
**que** ledit deuxième évidement (2.2) est ouvert par sa face frontale au bout dudit plan (2.1) et que ladite partie supérieure (2) présente un plan supérieur (2.3) qui peut recevoir tout moyen de serrage compatible.

2. Fermeture rapide mécanique linéaire selon la revendication 1, **caractérisée par le fait que** ladite partie supérieure (2) est engagée, par ladite zone de réception (2.2.1) dudit un évidement (2.2), sur l'un desdits éléments d'arrêt (1.2) de la partie inférieure (1), et, par un déplacement linéaire de la partie supérieure (2), les deux éléments d'arrêt (1.2) de la partie inférieure (1) sont encliquetés dans les évidements (2.2) de la partie supérieure (2), et qu'elle est verrouillée et déverrouillée en cours arrière par ledit verrou de serrage (1.7) disposé côté frontal sur la partie inférieure (1) et par ledit élément de vissage (1.8).

3. Fermeture rapide mécanique linéaire selon les revendications 1 et 2, **caractérisée par le fait que**, sur le plan (1.1) de ladite partie inférieure (1), d'autres éléments d'arrêt (1.2) surmoulés en relief les uns après les autres, dans un axe (x) transversalement à la direction de serrage du dispositif de serrage de centrage, ainsi que d'autres évidements (2.2) ménagés les uns après les autres dans le plan (2.1) de la partie inférieure (2), dans un axe (x) transversalement à la direction de serrage du dispositif de serrage de centrage peuvent être disposés respectivement de manière à être coïncidents, également les uns à côté des autres.

4. Fermeture rapide mécanique linéaire selon l'une quelconque des revendications précédentes, **caractérisée par le fait que** lesdits éléments d'arrêt (1.2) de la partie inférieure (1) et lesdits évidements (2.2) de la partie supérieure (2) présentent une surface plane à bords chanfreinés, ainsi que, d'une part, une face frontale droite et, en regard, une face frontale convexe semi-circulaire.

5. Fermeture rapide mécanique linéaire selon l'une quelconque des revendications précédentes, **caractérisée par le fait que** lesdits éléments d'arrêt (1.2) de la partie inférieure (1) présentent, en tant que languette, un profil en queue d'aronde s'étendant autour du contour extérieur et que les évidements (2.2) de la partie supérieure (2) présentent, en tant que rainure, un profil en queue d'aronde s'étendant autour du contour extérieur.

6. Fermeture rapide mécanique linéaire selon l'une quelconque des revendications précédentes, **caractérisée par le fait que** la zone de réception (2.2.1) ménagée de manière continue sur ledit un évidement (2.2) présente une forme carrée ayant un contour intérieur plan vertical et un bord supérieur chanfreiné.

7. Fermeture rapide mécanique linéaire selon la revendication 1, **caractérisée par le fait que** ladite partie inférieure (1) avec ses deux mâchoires de base (1.4) surmoulées sur le plan (1.3) et avec son ouverture taraudée (1.5) centrale traversante destinée à recevoir une broche filetée peut être disposée sur n'importe quel dispositif de serrage de centrage.

8. Fermeture rapide mécanique linéaire selon la revendication 1, **caractérisée par le fait que** ladite partie supérieure (2) est équipée sur son plan (2.3) de manière à recevoir tout moyen de serrage compatible.
